# EUROPÄISCHE PATENTSCHRIFT

(11) **EP 3 097 763 B1**
(45) Veröffentlichungstag und Bekanntmachung des Hinweises auf die Patenterteilung: **03.01.2018**
(21) Anmeldenummer: 16169130.8
(22) Anmeldetag: 11.05.2016
(51) Int. Cl.: A01D 42/06, A01D 43/063, E01H 1/08

(54) **FAHRZEUG MIT KNICKLENKUNG UND SAUGSCHLAUCH**
VEHICLE WITH ARTICULATED STEERING AND SUCTION HOSE
VEHICULE EQUIPE D'UNE DIRECTION ARTICULEE ET TUYAU D'ASPIRATION

(30) Priorität: 26.05.2015 DE 202015102681 U
(43) Veröffentlichungstag der Anmeldung: 30.11.2016
(73) Patentinhaber: Kugelmann Maschinenbau e.K., 87675 Rettenbach (DE)
(72) Erfinder: Meckelburg, Harald, 86807 Buchloe (DE)
(74) Vertreter: Tetzner, Michael

(56) Entgegenhaltungen:
- DE-A1- 4 336 821
- DE-A1-102010 040 790
- DE-C1- 3 544 166
- DE-U1- 20 106 371
- DE-U1- 29 722 361
- DE-U1-202015 102 684

## Beschreibung

Die Erfindung betrifft ein Fahrzeug mit einer Knicklenkung, einem frontseitigen Arbeitsgerät, einem Sammelbehälter, einem Sauggebläse sowie einem vom Arbeitsgerät zum Sammelbehälter führenden Saugschlauch.
Derartige Fahrzeuge werden beispielsweise als Kehrmaschinen im kommunalen Bereich oder als Mähfahrzeuge, insbesondere Rasenmäher, eingesetzt. Bei diesen Fahrzeugen wird das aufzusammelnde Gut, wie Laub oder Gras, über das frontseitige Arbeitsgerät angesaugt und über den Saugschlauch in den Sammelbehälter gefördert. Fahrzeuge mit Knicklenkung haben den Vorteil, dass sie sehr wendig sind, müssen aber in Kauf nehmen, dass der Saugkanal aufgrund der Knicklenkung nicht zentral durch das Fahrzeug geführt werden kann. Der Saugschlauch wird daher auf einer Seite des Fahrzeugs gehaltert, wodurch sich jedoch die Gefahr von störenden Ablagerungen bzw. Verstopfungen im Bereich des Saugschlauches erhöht und ein unbefriedigendes Reinigungsergebnis die Folge ist.
In der DE 201 06 371 U1 wurde daher vorgeschlagen, dass die Rohrleitung zum Transport des zu fördernden Stoffes aus wenigstens einem starren Rohrstück sowie mindestens einem daran angesetzten flexiblen Schlauchstück besteht und wobei weiterhin ein Antrieb zur Rotation des starren Rohrstücks um dessen Längsachse vorgesehen ist. Das flexible Schlauchstück wurde mit einem Ende drehfest am starren Rohrstück befestigt und mit seinem anderen Ende an einem geeigneten Drehlager gelagert. Die Drehbewegung der Rohrleitung führt dabei zu einem Ablösen und Weitertransport etwaiger angelagerter Stoffe, sodass eine Verstopfung der Rohrleitung zuverlässig verhindert werden kann.
Weitere Fahrzeuge mit seitlicher Schlauchführung sind aus der DE 10 2010 040 790 A1, der DE 35 44 166 C1 und der DE 297 22 361 U1 bekannt.

Der Erfindung liegt nun die Aufgabe zugrunde, eine einfachere, insbesondere eine rein mechanische Lösung zu finden, um Verstopfungen im Bereich des Saugschlauches zu vermeiden.

Erfindungsgemäß wird diese Aufgabe durch die Merkmale des Anspruches 1 gelöst. Vorteilhafte Ausgestaltungen der Erfindung sind Gegenstand der weiteren Ansprüche.

Das erfindungsgemäße Fahrzeug weist eine Knicklenkung, ein frontseitiges Arbeitsgerät, einen Sammelbehälter, ein Sauggebläse sowie einen vom Arbeitsgerät zum Sammelbehälter führenden Saugschlauch auf. Weiterhin ist ein seitlich am Fahrzeug gehaltertes Führungsrohr vorgesehen, wobei der Saugschlauch relativ zum Führungsrohr verschiebbar im Führungsrohr geführt ist.

Bei Fahrzeugen mit Knicklenkung besteht die Problematik, dass der Saugschlauch nur seitlich am Fahrzeug vorbeigeführt und gehaltert werden kann. Der Saugschlauch muss dabei so bemessen werden, dass es auch bei Kurvenfahrten nicht zu einer übermäßigen Beanspruchung des Saugschlauches kommt. Bei einem Lenkeinschlag auf die Seite, auf der der Saugschlauch angeordnet ist, kommt es zu einer Stauchung, sodass der Saugschlauch bei herkömmlichen Fahrzeugen oftmals nach unten durchhängt. Dieser durchhängende Schlauchsack behindert die Saugförderung, sodass sich bei einer solchen Lenksituation erste Ansätze im Saugschlauch bilden können, welche die Gefahr von Verstopfungen erhöhen und das Reinigungsergebnis verschlechtern. Das Ausweichen des Saugschlauches nach unten bei einer Kurvenfahrt beruht vor allem darauf, dass der Saugschlauch meistens mittig am Fahrzeug fixiert ist. Durch das erfindungsgemäße Führungsrohr in diesem Bereich ist die Stauchung des Saugschlauches nicht nur auf dem Bereich zwischen Sammelbehälter und Zwischenhalterung beschränkt. Es ist vielmehr möglich, dass sich der Saugschlauch über seine gesamte Länge stauchen und darüber hinaus sich im Bereich des Führungsrohres verschieben kann. Auf diese Weise kann eine Sackbildung des Saugschlauches im Bereich zwischen Sammelbehälter und Führungsrohrs zuverlässig vermieden werden.

Das Führungsrohr und die Verschiebbarkeit des Saugschlauches in Längsrichtung des Führungsrohres ermöglichen auch bei einem Lenkeinschlag auf die Saugschlauchseite einen stetig ansteigenden Verlauf des Saugschlauches, wodurch die Gefahr von Anbackungen erheblich reduziert wird. Gemäß einer Ausgestaltung der Erfindung ist das Führungsrohr mit einem zum hinteren Ende des Fahrzeuges ansteigenden Winkel im Bereich von 20° < α < 60°C, vorzugsweise 25° < α < 35° am Fahrzeug gehaltert.

Des Weiteren kann der Schlauch eine Dehnfähigkeit in Längsrichtung des Saugschlauches von 10 - 35%, vorzugsweise von 15 - 25% aufweisen. Dabei hat es sich als besonderes vorteilhaft herausgestellt, wenn der Saugschlauch in der Geradeausstellung des Fahrzeuges mit einem um 2 - 20%, vorzugsweise um 10 - 15% gestreckten Zustand zwischen Arbeitsgerät und Sammelbehälter eingebaut ist. Auf diese Weise wird noch eine ausreichende Dehnfähigkeit des Saugschlauches bei einem Lenkeinschlag auf die vom Saugschlauch abgewandte Seite und eine nicht übermäßige Stauchung bei einem Lenkeinschlag auf die Saugschlauchseite gewährleistet.

Der Saugschlauch ist vorzugsweise mit einer Verstärkungsspirale, insbesondere eine Federstahlspirale oder einer Hart-PVC-Spirale ausgebildet, um eine Reduzierung der Saugleistung durch Eindrücken des Saugschlauches aufgrund einer Druckbeanspruchung von außen zu vermeiden. Des Weiteren ist der Saugschlauch auf seiner Außenseite vorzugsweise gewellt ausgebildet, wodurch sich die Reibung an der Innenwandung des Führungsrohres verringert.

Das Führungsrohr ist vorzugsweise lösbar am Fahrzeug gehaltert und weist eine Länge von 10 - 50%, vorzugsweise 25 - 35% der Länge des Saugschlauches auf. Um die Verschiebung des Saugschlauches in Führungsrohr zu erleichtern, ist das Führungsrohr mit einer Einlauftrompete und einer Auslauftrompete versehen.

Das Fahrzeug weist einen Vorderwagen und einen Hinterwagen auf, die über die Knicklenkung miteinander verbunden sind. Der Saugschlauch weist dabei in jeder Knickstellung zwischen Vorder- und Hinterwagen einen stetig ansteigenden Verlauf zwischen Arbeitsgerät und Sammelbehälter auf.

Die Halterung des Saugschlauches durch das Führungsrohr, welches eine Verschiebbarkeit des Saugschlauches ermöglicht, hat den weiteren Vorteil, dass die Saugstrecke zwischen Arbeitsgerät und Sammelbehälter um wenigstens 20%, typischerweise um etwa 30%, reduziert werden kann. Dieses ist dadurch bedingt, dass bei der erfindungsgemäßen Lösung die gesamte Länge des Saugschlauches für die Dehnung beim Linkseinschlag zur Verfügung steht.

Bei dem Fahrzeug kann es sich beispielsweise um eine Kehrmaschine mit einem Kehrbesen als frontseitigem Arbeitsgerät handeln. Alternativ kann die Erfindung aber auch bei einem Mähfahrzeug mit einem als Mähwerk ausgebildeten frontseitigen Arbeitsgerät zum Einsatz kommen.

Weitere Ausgestaltungen der Erfindung werden im Folgenden anhand der Beschreibung eines Ausführungsbeispiels näher beschrieben.

In der Zeichnung zeigen
- Fig. 1: eine schematische Seitenansicht des erfindungsgemäßen Fahrzeuges,
- Fig. 2: eine Schnittdarstellung im Bereich des Führungsrohres,
- Fig.: 3 eine schematische Seitenansicht des Fahrzeuges mit Lenkeinschlag nach links,
- Fig. 4: eine schematische Seitenansicht des Fahrzeuges in der Geradeausstellung und
- Fig.: 5 eine schematische Seitenansicht des Fahrzeuges mit Lenkeinschlag nach rechts.

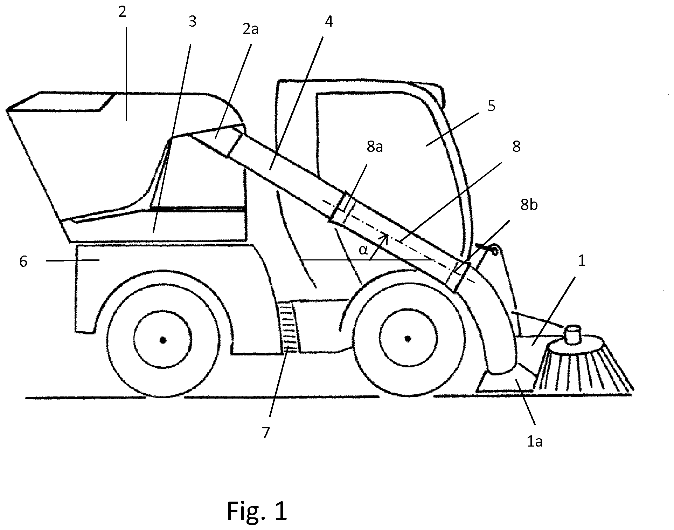

Bei dem in Fig. 1 dargestellten Fahrzeug handelt es sich beispielsweise um eine Kehrmaschine mit einem als Kehrbesen ausgebildeten frontseitigen Arbeitsgerät 1, einem Sammelbehälter 2, einem Sauggebläse 3 sowie einem vom Arbeitsgerät 1 zum Sammelbehälter 2 führenden Saugschlauch 4. Das Fahrzeug weist ferner einen Vorderwagen 5 und einen Hinterwagen 6 auf, die über eine Knicklenkung 7 miteinander verbunden sind.

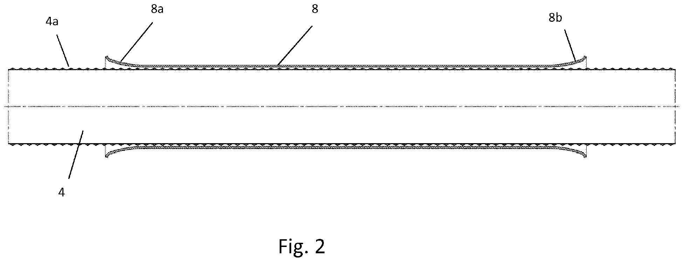

Seitlich am Fahrzeug, hier am Vorderwagen 5, ist ein Führungsrohr 8 lösbar gehaltert, wobei der Saugschlauch 4 relativ zum Führungsrohr verschiebbar im Führungsrohr 8 geführt ist. Die Situation im Bereich des Führungsrohres 8 ist in der Schnittdarstellung gemäß Fig. 2 näher dargestellt. Das Führungsrohr 8 weist eine Einlauftrompete 8a und eine Auslauftrompete 8b auf, um die Verschiebung des Saugschlauches 4 im Führungsrohr zu erleichtern. Der Saugschlauch 4 ist darüber hinaus mit einer Verstärkungsspirale 4a versehen und ist auf seiner äußeren Umfangsfläche gewellt ausgebildet, wodurch die Reibung zwischen Saugschlauch und Führungsrohr verringert wird

Das Arbeitsgerät 1 weist einen Sauganschluss 1a und der Sammelbehälter 2 einen Anschlussstutzen 2a auf, wobei der Saugschlauch 4 mit einem Ende am Sauganschluss 1a des Arbeitsgerätes 1 und mit dem anderen Ende am Anschlussstutzen 2a des Sammelbehälters 2 angeschlossen ist.

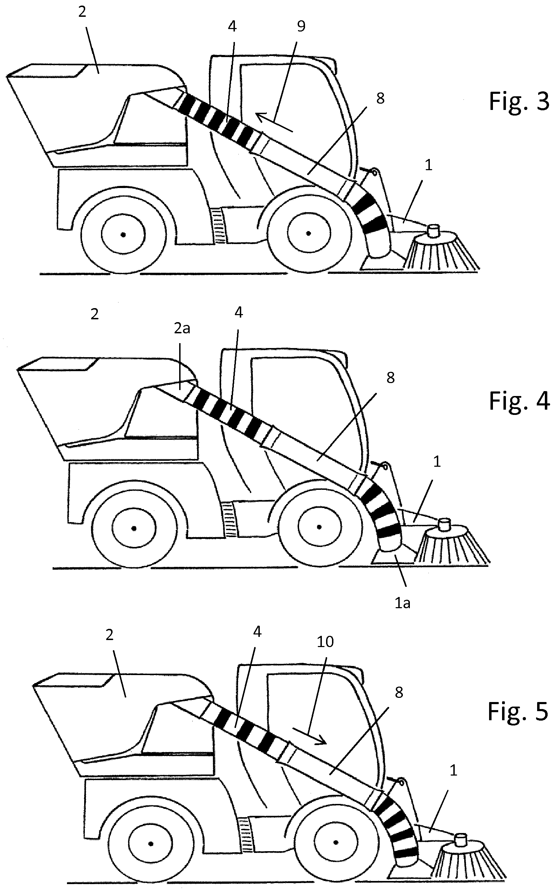

In den Figuren 3 bis 5 ist der Saugschlauch 4 gestreift dargestellt, um seine Verschiebung im Führungsrohr 8 besser darstellen zu können. Fig. 4 zeigt dabei die Geradeausstellung des Fahrzeuges. In dieser Stellung ist der Saugschlauch 4 in einem - gegenüber dem unbelasteten Zustand - um 2 - 20% gestreckten Zustand zwischen Arbeitsgerät 1 und Sammelbehälter 2 eingebaut.

Bei einem Lenkeinschlag nach links (Fig. 3), also auf die von Saugschlauch 4 abgewandte Seite, kommt es zu einer Verschiebung des Saugschlauches 4 bezüglich des Führungsrohres 8 in Richtung des Pfeiles 9. Es befindet sich somit zwischen Sammelbehälter 2 und Führungsrohr 8 eine größere Länge des Saugschlauches 4 als in Fig. 4. Darüber hinaus kommt es in der Stellung gemäß Fig. 3 zu einer zusätzlichen Dehnung des Saugschlauches 4.

In Fig. 5 ist der Lenkeinschlag nach rechts, also auf die dem Saugschlauch 4 zugewandte Seite dargestellt. Hier kommt es zu einer entgegengesetzten Verschiebung des Saugschlauches 4 (Pfeil 10) im Führungsrohr 8. Zusätzlich wird der Saugschlauch 4 weiter gestaucht.

Wie man in den Figuren 3 bis 5 erkennen kann, hängt der Saugschlauch 4 in keiner Fahrsituation (insb. Fig. 5) nach unten durch. Der Saugschlauch 4 weist daher in jeder Knickstellung zwischen Vorder- und Hinterwagen einen stetig ansteigenden Verlauf zwischen Arbeitsgerät 1 und Sammelbehälter 2 auf. Der Winkel α zwischen Führungsrohr 8 und der Horizontalen (siehe Fig. 1) liegt zweckmäßigerweise im Bereich von 20° bis 60°.

Durch die Ausbildung des Führungsrohres 8 mit Einlauftrompete 8a und Auslauftrompete 8b und der gewellten Außenfläche des Saugschlauches 4 wird die Reibung und der damit einhergehende Verschleiß minimiert. Beim Saugschlauch 4 handelt es sich ohnehin um ein Verschleißteil, welches regelmäßig ausgetauscht werden muss, wobei der Verschleiß im Inneren des Saugschlauchs durch das zu fördernde Gut deutlich höher anzusetzen ist als der durch die Verschiebbarkeit des Saugschlauches im Führungsrohr 8 bedingte Verschleiß.

Der Saugschlauch 4 sollte eine Dehnfähigkeit in Längsrichtung des Saugschlauches von 10 - 35% aufweisen, um den Saugschlauch einerseits in einer leicht gestreckten Stellung einbauen zu können und andererseits eine ausreichende Streckung bei einem Lenkeinschlag auf die vom Saugschlauch 4 abgewandte Seite zu gewährleisten.

Die Länge des Führungsrohres sollte im Bereich von 10 - 50% liegen und ist an die besonderen Fahrzeuggegebenheiten anzupassen.

## Patentansprüche

1. Fahrzeug mit einer Knicklenkung (7), einem frontseitigem Arbeitsgerät (1), einem Sammelbehälter (2), einem Sauggebläse (3) sowie einem vom Arbeitsgerät zum Sammelbehälter führenden Saugschlauch (4), **gekennzeichnet durch** ein seitlich am Fahrzeug gehaltertes Führungsrohr (8), wobei der Saugschlauch relativ zum Führungsrohr verschiebbar im Führungsrohr geführt ist.

2. Fahrzeug nach Anspruch 1, **dadurch gekennzeichnet, dass** das Führungsrohr (8) mit einem zum hinteren Ende des Fahrzeugs ansteigenden Winkel im Bereich von 20° < α < 60° am Fahrzeug gehaltert ist.

3. Fahrzeug nach einem oder mehreren der vorhergehenden Ansprüche, **dadurch gekennzeichnet, dass** das Führungsrohr (8) lösbar am Fahrzeug gehaltert ist.

4. Fahrzeug nach einem oder mehreren der vorhergehenden Ansprüche, **dadurch gekennzeichnet, dass** der Saugschlauch (4) mit einer Verstärkungsspirale (4a) versehen ist.

5. Fahrzeug nach einem oder mehreren der vorhergehenden Ansprüche, **dadurch gekennzeichnet, dass** der Saugschlauch außen gewellt ausgebildet ist.

6. Fahrzeug nach einem oder mehreren der vorhergehenden Ansprüche, **dadurch gekennzeichnet, dass** das der Saugschlauch eine Dehnfähigkeit in Längsrichtung des Saugschlauchs von 10 bis 35% aufweist.

7. Fahrzeug nach einem oder mehreren der vorhergehenden Ansprüche, **dadurch gekennzeichnet, dass** die Länge des Führungsrohres 10 bis 50% der Länge des Saugschlauches beträgt.

8. Fahrzeug nach einem oder mehreren der vorhergehenden Ansprüche, **dadurch gekennzeichnet, dass** das Führungsrohr eine Einlauftrompete (8a) und eine Auslauftrompete (8b) aufweist.

9. Fahrzeug nach einem oder mehreren der vorhergehenden Ansprüche, **dadurch gekennzeichnet, dass** das Arbeitsgerät einen Sauganschluss (1a) und der Sammelbehälter (2) eine Anschlussstutzen (2a) aufweisen, wobei der Saugschlauch mit einem Ende an den Sauganschluss des Arbeitsgerätes und mit dem anderen Ende am Anschlussstutzen des Sammelbehälters angeschlossen ist.

10. Fahrzeug nach einem oder mehreren der vorhergehenden Ansprüche, **dadurch gekennzeichnet, dass** das der Saugschlauch in einer Geradeausstellung des Fahrzeugs mit einem um 2 bis 20% gestreckten Zustand zwischen Arbeitsgerät und Sammelbehälter eingebaut ist.

11. Fahrzeug nach einem oder mehreren der vorhergehenden Ansprüche, **dadurch gekennzeichnet, dass** das Fahrzeug einen Vorderwagen (5) und einen Hinterwagen (6) aufweist, die über die Knicklenkung (7) miteinander verbunden sind und der Saugschlauch in jeder Knickstellung zwischen Vorder- und Hinterwagen über einen stetig ansteigenden Verlauf zwischen Arbeitsgerät und Sammelbehälter aufweist.

12. Fahrzeug nach einem oder mehreren der vorhergehenden Ansprüche, **dadurch gekennzeichnet, dass** es sich bei dem Fahrzeug um eine Kehrmaschine und bei dem frontseitigem Arbeitsgerät um einen Kehrbesen handelt.

13. Fahrzeug nach einem oder mehreren der vorhergehenden Ansprüche, **dadurch gekennzeichnet, dass** es sich bei dem Fahrzeug um ein Mähfahrzeug und bei dem frontseitigem Arbeitsgerät um ein Mähwerk handelt.

## Claims

1. Vehicle having an articulated steering system (7), a working device (1) at the front, a collection container (2), a suction fan (3) and a suction hose (4) that leads from the working device to the collection container, **characterised by** a guide tube (8) held to the side of the vehicle, the suction hose being guided in the guide tube so as to be movable relative to the guide tube.

2. Vehicle according to claim 1, **characterised in that** the guide tube (8) is held on the vehicle at an angle, in the range of from 20° < α < 60°, that rises towards the rear end of the vehicle.

3. Vehicle according to one or more of the preceding claims, **characterised in that** the guide tube (8) is detachably held on the vehicle.

4. Vehicle according to one or more of the preceding claims, **characterised in that** the suction hose (4) is provided with a reinforcing spiral (4a).

5. Vehicle according to one or more of the preceding claims, **characterised in that** the suction hose is undulating on the outside.

6. Vehicle according to one or more of the preceding claims, **characterised in that** the suction hose has an extensibility, in the longitudinal direction of the suction hose, of from 10 to 35%.

7. Vehicle according to one or more of the preceding claims, **characterised in that** the length of the guide tube is from 10 to 50% the length of the suction hose.

8. Vehicle according to one or more of the preceding claims, **characterised in that** the guide tube comprises a flared inlet portion (8a) and a flared outlet portion (8b).

9. Vehicle according to one or more of the preceding claims, **characterised in that** the working device comprises a suction attachment (1a), and the collection container (2) comprises a connecting pipe (2a), the suction hose being connected to the suction attachment of the working device at one end and to the connecting pipe of the collection container at the other end.

10. Vehicle according to one of more of the preceding claims, **characterised in that**, in a straight position of the vehicle, the suction hose is installed between the working device and the collection container in a state in which said hose is extended by 2 to 20%.

11. Vehicle according to one or more of the preceding claims, **characterised in that** the vehicle comprises a front end (5) and a rear end (6), which are interconnected by means of the articulated steering system (7), and the suction hose has, in each articulated position between the front and rear ends, a constantly rising gradient between the working device and the collection container.

12. Vehicle according to one or more of the preceding claims, **characterised in that** the vehicle is a sweeping machine and the working device at the front is a sweeping brush.

13. Vehicle according to one or more of the preceding claims, **characterised in that** the vehicle is a mowing vehicle and the working device at the front is a mowing unit.

## Revendications

1. Véhicule avec une direction articulée (7), un appareil de travail (1) côté frontal, un bac de collecte (2), un ventilateur aspirateur (3) ainsi qu'un tuyau d'aspiration (4) conduisant de l'appareil de travail au bac de collecte,
**caractérisé par** un tube de guidage (8), maintenu latéralement sur le véhicule, sachant que le tuyau d'aspiration peut être déplacé par rapport au tube de guidage.

2. Véhicule selon la revendication 1, **caractérisé en ce que** le tube de guidage (8) est maintenu sur le véhicule avec un angle ascendant (α) situé dans une plage de 20 ° à 60 °.

3. Véhicule selon l'une ou plusieurs des revendications précédentes,
**caractérisé en ce que** ke tube de guidage (8) est fixé de manière amovible sur le véhicule.

4. Véhicule selon l'une ou plusieurs des revendications précédentes,
**caractérisé en ce que** le tuyau d'aspiration (4) est doté d'une spirale de renforcement (4a).

5. Véhicule selon l'une ou plusieurs des revendications précédentes,
**caractérisé en ce que** le tuyau d'aspiration est de conception ondulée à l'extérieur.

6. Véhicule selon l'une ou plusieurs des revendications précédentes,
**caractérisé en ce que** le tuyau d'aspiration présente une extensibilité de 10 à 35 % dans le sens de la longueur dudit tuyau d'aspiration.

7. Véhicule selon l'une ou plusieurs des revendications précédentes,
**caractérisé en ce que** la longueur du tube de guidage est de 10 à 50 % de la longueur du tuyau d'aspiration.

8. Véhicule selon l'une ou plusieurs des revendications précédentes,
**caractérisé en ce que** le tube de guidage est doté d'une trompète d'admission (8a) et d'une trompette d'évacuation (8b).

9. Véhicule selon l'une ou plusieurs des revendications précédentes,
**caractérisé en ce que** l' appareil de travail est doté d'un raccord d'aspiration (1a) et que le bac de collecte (2) est doté d'une tubulure de raccordement (2a), sachant que le tuyau d'aspiration est raccordé, à une extrémité, au raccord d'aspiration de l'appareil de travail et, à l'autre extrémité, à la tubulure de raccordement du bac de collecte.

10. Véhicule selon l'une ou plusieurs des revendications précédentes,
**caractérisé en ce que,** lors d'une orientation en ligne droite du véhicule, le tuyau d'aspiration est inséré entre l'appareil de travail et le bac de collecte dans un état d'extension de 2 à 20 %.

11. Véhicule selon l'une ou plusieurs des revendications précédentes,
**caractérisé en ce que** le véhicule est doté d'une voiture antérieure (5) et d'une voiture postérieure (6) qui sont reliées l'une à l'autre par l'intermédiaire de la direction articulée (7) et que, dans chaque position d'articulation entre la voiture antérieure et la voiture postérieure, le tuyau d'aspiration s'étend en ligne ascendante, constante entre l'appareil de travail et le bac de collecte.

12. Véhicule selon l'une ou plusieurs des revendications précédentes,
**caractérisé en ce que** ce véhicule est une balayeuse et que l'appareil de travail côté frontal est une brosse de balayage.

13. Véhicule selon l'une ou plusieurs des revendications précédentes,
**caractérisé en ce que** ce véhicule est une moissonneuse et que l'appareil de travail côté frontal est un dispositif de fauchage.
